Europäisches Patentamt

European Patent Office

Office européen des brevets

(19)

(11) Publication number: **0 481 617 A2**

# EUROPEAN PATENT APPLICATION

(21) Application number: **91308799.5**

(22) Date of filing: **26.09.91**

(51) Int. Cl.5: **G06F 9/45**

(30) Priority: **15.10.90 IL 95995**

(43) Date of publication of application:
**22.04.92 Bulletin 92/17**

(84) Designated Contracting States:
**DE FR GB**

(72) Inventor: **Golumbic, Martin Charles**
**31 Rehov Soroka**
**Haifa(IL)**
Inventor: **Rainish, Vladimir**
**Esther Hamalkah, 20, Apt., 18**
**Haifa 35427(IL)**

(71) Applicant: **International Business Machines**
**Corporation**
**Old Orchard Road**
**Armonk, N.Y. 10504(US)**

(74) Representative: **Killgren, Neil Arthur**
**IBM United Kingdom Limited Intellectual**
**Property Department Hursley Park**
**Winchester Hampshire SO21 2JN(GB)**

(54) Instruction scheduler for a computer.

(57) An instruction scheduler for a computer provides for scheduling of a sequence of instructions beyond basic block boundaries by suppressing selected sub-sequences of instructions to generate a modified sequence of instructions and then scheduling the modified sequence of instructions using a conventional basic block scheduler. Preferably a sub-sequence is automatically suppressed by the basic block scheduler in response to being instructed that the entry point and the exit point for scheduling operation relate to separate basic blocks. Alternatively, a sub-sequence can be labelled as being for suppression by tagging the instructions of the sub-sequence appropriately. Alternatively, it can be suppressed by saving the subsequence and by inserting a pseudo instruction in its place and including a pointer from the pseudo instruction to the saved sub-sequence of instructions. In the latter case, after scheduling, the pseudo instruction can be expanded by accessing the saved sub-sequence using the pointer in the pseudo instruction. A candidate sub-sequence for suppression can be found by identifying a region of a control flow graph for the input instruction sequence which has a unique entry and a unique exit and meets predetermined criteria.

FIG 1

The present invention relates to an instruction scheduler for a computer and in particular to an instruction scheduler which enables the scheduling of instructions beyond basic blocks in a manner suitable for use with a parallel/pipelined computer.

Instruction scheduling is a process of rearranging or transforming program statements before execution by a processor in order to reduce possible run-time delays between compiled instructions. An instruction scheduler is normally implemented as part of a compiler for a computer. A general introduction to compilers can be found in the following work:

R1    A.V. Aho, R. Sethi and J.D. Ullman "Compilers: Principles, Techniques and Tools", Addison-Wesley, 1986.

Instruction scheduling is usually performed at an intermediate language or assembly code level. Such transformations must preserve data dependency and are subject to other constraints. This can be particularly advantageous when compiling for pipelined machine architectures, which allow increased throughput by overlapping instruction execution. For example, if there is a delay of one cycle between fetching and using a value V, it would be desirable to "cover" this delay with an instruction that is independent of V and is "ready" to be executed.

Conventional wisdom is that instructions which are capable of being scheduled can be found within basic blocks, and that there is no need to move instructions beyond basic block boundaries. A basic block is a sequence of consecutive instructions for which the flow of control enters at the beginning of the sequence and exits at the end thereof without a wait or branch possibility, except at the point of exit. Virtually, all of the previous work on the implementation of instruction scheduling concentrated on scheduling within basic blocks. Examples of basic block schedulers are described in the following articles:

R2    Bernstein, D., Boral, H. and Pinter, R.Y. "Optimal Chaining in Expression Trees" published in Proceedings of the ACM Symposium on Compiler Construction (June 1986), at pages 1-10.

R3    Gibbons, P.B. and Muchnick, S.S. "Efficient Instruction Scheduling for a Pipelined Architecture" published in Proceedings of the ACM Symposium on Compiler Construction (June 1986) at pages 11-16.

R4    Goodman, J.R. and Hsu, W. -C. "Code Scheduling and Register Allocation in Large Basic Blocks" published in Proceedings of the International Conference on Supercomputing, (St. Malo, France), ACM Press, (July 1988) at pages 442-452.

R5    Hennessy, J.L. and Gross, T. "Postpass Code Optimization of Pipeline Constraints" published in ACM Transactions on Programming Languages and Systems 5 (July 1984) at pages 422-448.

R6    H. Warren, "Instruction Scheduling for the IBM RISC System/6000 Processor", published in the IBM Journal of Research and Development Vol. 34, No 1 (Jan 1990) at pages 85-92.

R7    S. Weiss and J. E. Smith "A Study of Scalar Compilation Techniques for Pipelined Supercomputers", Proceedings of the Second International Conference on Architectural Support for Programming Languages and Operating Systems (Oct. 1987) at pages 105-109.

A basic block scheduler, such as those described in the articles above, generally attempts to interleave independent instructions within each basic block so as to eliminate wasted machine cycles. Such schedulers are quite effective for programs with long basic blocks, common in some scientific applications. Branch instructions, however, restrict the effectiveness of pipelined architecture in ways that cannot be handled with only basic block transformations.

A particular application for instruction scheduling is in the field of so-called Reduced Instruction Set Computers (RISC). An introduction to RISC computers can be found in the following article:

R8    Patterson, D.A., "Reduced Instruction Set Computers" published in the Communications of the ACM (Jan. 1985) at pages 8-21.

The RISC approach to building high speed processors, which emerged in the late seventies, emphasises the need for the streamlining of program instructions. As a result, instructions have to be rearranged, usually at the intermediate language or assembly code level, to take full advantage of pipelining and thereby to improve performance. The burden of the instruction scheduling, is placed on optimising compilers that generate code for RISC processors. Usually, the compilers perform instruction scheduling at the basic block level, solving most of the problems posed by pipelined structure of RISC processors.

Even for basic RISC architectures scheduling only within basic blocks may result in code with many NO-OPs for certain Unix-type (Unix is a trademark of Unix System Laboratories Inc.) programs that include many small basic blocks terminated in unpredictable branches. These problems tend not to be so severe for scientific programs where basic blocks are normally larger.

Recently, a new type of architecture is evolving that extends RISC by the ability to issue more than one instruction per cycle. See, for example, the following article:

R9    R.D. Groves and R. Oehler, "An IBM Second Generation RISC Processor Architecture" published in the Proceedings of the IEEE Conference on Computer Design, (October 1989) at pages 134-137.

This type of high speed processor, called superscalar or superpipelined architecture, poses more serious challenges to compilers, since instruction scheduling at the basic block level is not sufficient to allow generation of code that utilises machine resources to a desired extent; see the following article:

R10     N.P. Jouppi and D.W. Wall, "Available Instruction-level Parallelism for Superscalar and Superpipelined Machines" published in the Proceedings of the Third ASPLOS Conference, (April 1989) at pages 272-282.

One recent effort to pursue instruction scheduling for superscalar machines was reported in the following article:

R11     M.C. Golumbic and V. Rainish, "Instruction Scheduling beyond Basic Blocks" published in the IBM Journal of Research and Development Vol. 34 , No 1 (Jan 1990) at pages 93-97.

In this article, code replication techniques for scheduling beyond the scope of basic blocks were investigated, resulting in reasonable improvements of running time of the compiled code. However, the approach described still leaves room for further improvement.

The object of the present invention is to provide an instruction scheduler which is able to perform scheduling beyond basic blocks so as to provide more efficient compiled code with fewer wasted machine cycles.

In accordance with the present invention, there is provided an instruction scheduler for a computer, the instruction scheduler comprising preprocessing logic for identifying, in an instruction sequence, a candidate sub-sequence of instructions which can be suppressed for the purposes of instruction scheduling and basic block scheduling logic which is responsive to the preprocessing logic for scheduling the instruction sequence with the identified sub-sequence suppressed.

The invention allows the use of a conventional basic block scheduler with the addition only of the preprocessing and post processing logic. The invention provides for scheduling across control flow with the capabilities well beyond basic blocks. The invention enables reductions in run-time delays, due to branches, loops etc., and enables pipelined architectures to be exploited in ways which would not otherwise be possible.

Preferably, the preprocessing logic is operative to produce a modified sequence of instructions in which basic blocks of instructions are arranged in control flow order. By then causing the basic block scheduling logic to schedule instructions using the modified sequence of instructions, the correct order of processing for the basic block scheduling logic can easily be ensured.

Preferably also, the preprocessing logic identifies an entry block and an exit block for the candidate sub-sequence, the basic block scheduling logic being responsive to notification of an entry block value and an exit block value which differ from one another to suppress the sub-sequence by treating it as a single pseudo instruction. In this way a sub-sequence is automatically suppressed by the basic block scheduler in response to being instructed that the entry point and the exit point for scheduling operation relate to separate basic blocks.

As an alternative however, the preprocessing can physically tag the instructions of a sub-sequence to be suppressed, the basic block scheduling logic using the tags to determine the instructions to be suppressed.

As a further alternative, the preprocessing logic can be arranged to suppress the sub-sequence by saving the sub-sequence and inserting a pseudo instruction in its place, the pseudo instruction recording the the register and memory references of the instructions it replaces. This enables a conventional basic block scheduler to be used unmodified as the basic block scheduling logic. In this case, the instruction scheduler preferably also comprises post-processing logic for expanding the pseudo instruction after scheduling of the modified sequence, by accessing the saved sub-sequence using a pointer associated with the pseudo instruction and replacing the pseudo instruction by the saved sub-sequence.

The preprocessing logic is preferably responsive to a control flow graph for the input instruction sequence to identify a candidate sub-sequence for suppression by identifying a region of the graph which has a unique entry and a unique exit and meets predetermined criteria. The preferred criteria, for a region H of the graph having an entry x and an exit y ($x \neq y$), are:

a) x and y belong to H;

b) the set of all predecessors of (H-x) is a subset of (H-y);

c) the set of all successors of (H-y) is a subset of (H-x); and

d) there is no region H' which is a subset of H, with entry x' and exit y' satisfying (a)-(c), with x = x' or y = y'.

Preferably, where the entry x and the exit y are basic blocks, a candidate sub-sequence for the region H comprises:
- the last instruction of the entry block x if this is a branch;
- the label at the top of the exit block y if there is one, and
- all instructions in all remaining blocks of H.

Preferably the preprocessing logic operates repeatedly on the input sequence of instructions for identifying a plurality of candidate sub-sequences for suppression. In this way, the preprocessing logic is operative to replace successively larger portions of the flow graph by summary pseudo instructions, resulting in new, larger sections of straight line code which can be scheduled by the basic block scheduler.

The invention also provides a computer comprising an instruction scheduler as set out above.

In accordance with a second aspect of the invention, there is provided a method of scheduling instructions in a computer comprising the steps of:

a) identifying, in an instruction sequence, a candidate sub-sequence of instructions which can be suppressed for the purposes of instruction scheduling; and

b) scheduling, using basic block scheduling logic, the instruction sequence with the identified sub-sequence suppressed.

A particular example of the present invention will be described hereinafter with reference to tables to be found at the end of this description and to the accompanying drawings in which:
- Table 1 is an example of a program for explaining the operation of the invention;
- Table 2 is an annotated sequence of machine instructions corresponding to part of the program of Table 1;
- Table 3 illustrates the sequence of instructions of Table 2 following preprocessing;
- Table 4 illustrates the sequence of instructions of Table 3 following scheduling;
- Table 5 illustrates an output sequence of instructions;
- Figure 1 is a schematic block diagram providing an overview of an instruction scheduler in accordance with the invention; and
- Figure 2 is a schematic representation of a typical flow graph.

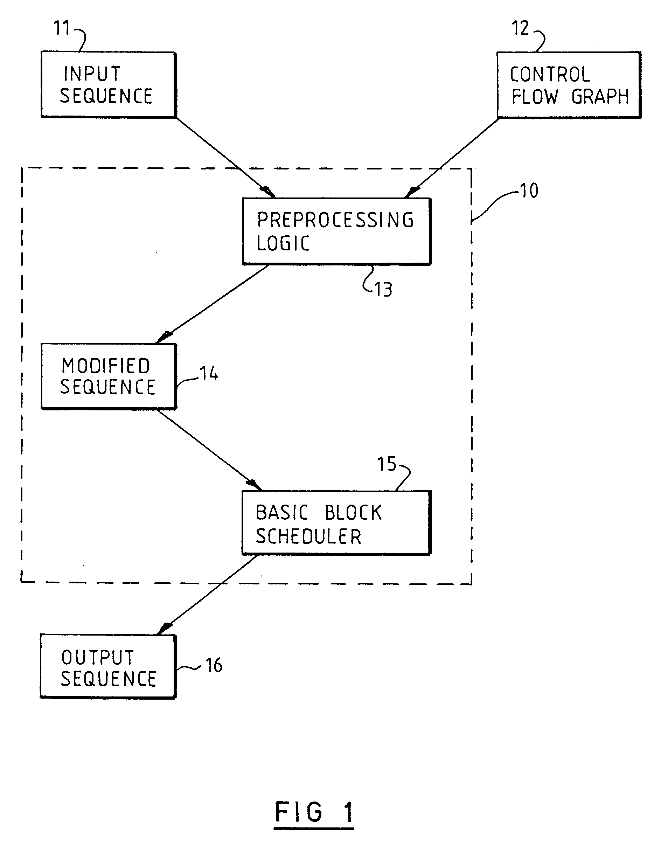

Figure 1 is a schematic block diagram providing an overview of an instruction scheduler 10 in accordance with the invention. The instruction scheduler takes as its input a sequence of instructions 11 and is additionally responsive to a control flow graph 12 for the program to be scheduled. The instruction scheduler provides as its output a rescheduled sequence of instructions 16. The instruction scheduler comprises preprocessing logic 13, which produces a modified instruction sequence 14, and a conventional basic block scheduler 15 such as described in Warren's article (reference R6), which is incorporated herein by reference. Note that the term "instruction" is to be interpreted broadly to include any statements which can be found in program, such labels, branch statements, and so on.

In this embodiment of the invention, the instruction scheduler forms part of a compiler, specifically one of the IBM XL family of compilers for the IBM RISC System/6000 computers. The instruction scheduler can be called in to operation one or more times as required during the compiling operation. It is described hereinafter as applied to instructions at an intermediate language level. It can, however, equally be applied at an assembly code level. In this embodiment the preprocessing logic 13, and the basic block scheduler 15 are held in the working storage of the IBM RISC System/6000 computer on which the compiler is running, as are the input 11, modified 14 and output 16 sequences of instructions. For further information on the IBM RISC System/6000 computer family, reference is made to the articles published in the IBM Journal of Research and Development Vol. 34, No 1 Jan 1990.

The preprocessing logic 13 has as its function to identify sub-sequences of instructions in the input instruction sequence having a unique entry and exit and satisfying certain minimality conditions. Such a sub-sequence forms a region of the flow graph for the sequence of instructions which is referred to hereinafter as an 'S-region'. Such a region of the flow graph has been described in the literature as a "hammock" (see Kas'janov, V. N., "Distinguishing Hammocks in a Directed Graph" published in Soviet Math. Doclady 16,5 (1975) at pages 448-550).

In performing this function, the preprocessing logic 13 utilises the control flow graph 12 which will have been generated by the conventional compiler logic for identifying basic blocks and loops in the code sequence and for checking the status of the various processor registers on entry into each block. The control flow graph includes a basic block table giving details about the basic blocks in the input instruction sequence, including data identifying the entry and exit points, the constituent instructions of the blocks and the logical relationships between blocks (eg. predecessor/successor relationships). A general discussion of the meaning of basic blocks and flow graphs is to be found in Reference R1 at pages 528 to 534.

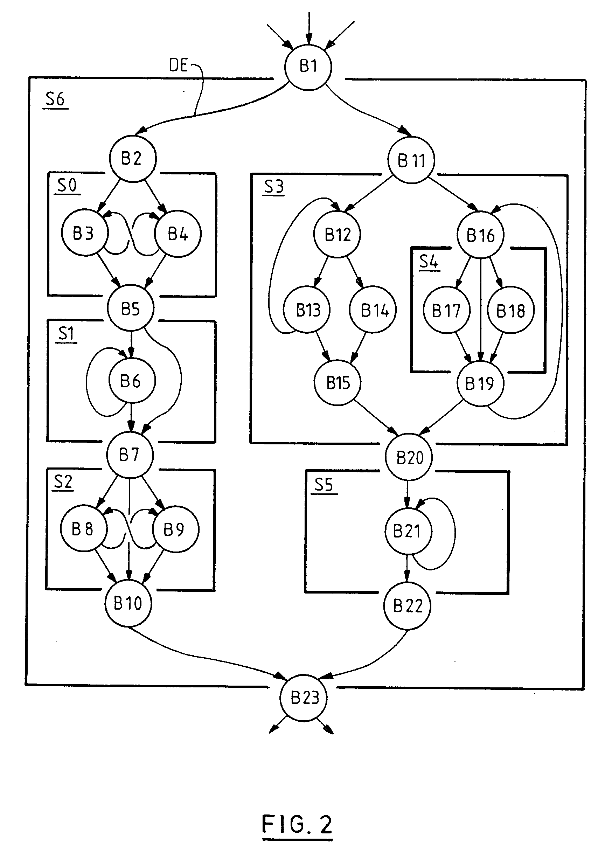

An example of part of a control flow graph G, representing a program to be scheduled, is illustrated in Figure 2. The nodes B1 to B23 in the flow graph correspond to the basic blocks in the program with directed edges between the nodes indicating which are the predecessors and successors of the various blocks. For example, as there is a directed edge DE1 from block B1 to B2, this means that B2 is a successor of B1. In other words, control of the program may flow from the basic block B1 to the basic block B2. It can be seen that the flow graph has a unique entry node B1 and a unique exit node B23.

Conveniently, the control flow graph 12 is stored in the memory of the computer on which the compiler is running in the form of a data structure having a set of linked records corresponding to the nodes in the graph, with the edges between the nodes represented by pointers between records. The pointers can be supplemented, where appropriate, by fields indicating the conditions that control the flow of the program from one basic block to another.

The input, output and modified sequences of instructions are also stored in the memory of the computer on which the compiler is running. Each sequence is stored as a doubly linked list. Each instruction in a sequence is stored with two fields in addition to the fields describing its parameters (registers, memory references etc.). The first additional field contains a pointer to the previous instructions and the second a pointer to the next instruction in the sequence. Using these pointers it is thus possible to scan the instruction sequence in either direction from one end to the other.

The preprocessor generates a modified instruction sequence 14 and issues control parameters to the basic block scheduler to cause it to schedule the instruction sequence with a sub-sequence or sub-sequences of instructions suppressed. Each suppressed sub-sequence of instructions corresponds to an S-region in the instruction sequence. Each such sub-sequence is treated as one pseudo instruction, enabling instructions to be moved beyond basic block boundaries. Data dependency must, of course, be preserved.

The preprocessor logic 13 identifies the S-regions (i.e. the sub-sequences of instructions) which can be summarised as a pseudo instructions for scheduling purposes by analysing the control flow graph 12. The preprocessor logic analyses the control flow graph to identify an S-region by searching for a sub-graph H of the graph G which has an entry x and an exit y ($x \neq y$) and satisfies the following requirements:

a) x and y belong to H;
b) the set of all predecessors of (H-x) is a subset of (H-y);
c) the set of all successors of (H-y) is a subset of (H-x); and
d) there is no region H' which is a subset of H, with entry x' and exit y' satisfying (a)-(c), with x = x' or y = y'.

The definition of an S-region H means that every path from (a node of G) outside of H to H goes through x, that every path from H to (a node of G) outside of H goes through y and that there is at most one S-region with entry x or with exit y.

In Figure 2, the there are seven S-regions, which are labelled S0 to S6 as follows:

S0 consists of B2-B5 with entry B2 and exit B5
S1 consists of B5-B7 with entry B5 and exit B7
S2 consists of B7-B10 with entry B7 and exit B10
S3 consists of B11-B20 with entry B11 and exit B20
S4 consists of B16-B19 with entry B16 and exit B19
S5 consists of B20-B22 with entry B20 and exit B22
S6 consists of B1-B23 with entry B1 and exit B23

S-regions can be nested and/or chained. In this example, S0, S1, S2 and S3, S5 are chained S-regions; region S4 is nested inside region S3 and S0-S5 are nested inside S6.

The notion of an S-region is similar to that of a statement in a well structured language without the minimality condition, however, in addition to dealing with arbitrary program constructs certain well structured statements are also disallowed. The S-regions S0 and S2, for example, are "very unstructured". Note too that the group of basic blocks B12, B13, B14, B15 is not an S-region, although under certain definitions it might be considered a statement.

By replacing S-regions with pseudo instructions, as described later, longer sections of "straight line" code can be produced, permitting instructions to be moved beyond basic blocks. For example, in Figure 2, the chain B2, P0, B5, P1, B7, P2, B10 (where P0, P1 and P2 represent the pseudo instructions for the S-regions S0, S1 and S2, respectively) is straight line code and it now becomes possible to move instructions from B7 up to B2 or from B5 down to B10, etc. assuming, in the normal manner, that data dependency permits. Note that the saved instruction sub-sequence for S5 (which the pseudo instruction P5 will replace) consists of only instructions from block B21, because basic block 20 has no branch and basic block 22 has no label.

The decomposition into S-regions provides a mechanism for elimination remaining delays (NO-OPs) that result from branches and loops. By generating all S-regions, or generating them on demand, instruction scheduling can be performed as follows. It is assumed in the following that the instructions to be scheduled are in an intermediate language (IL) for which every basic block begins with a label (with no instruction) only if there is a need for it such as being the target of a branch.

The control flow graph provides the information on the structure of the basic blocks which is needed for the identification of the S-regions including the determination of their respective entry node x, exit node y and intermediate nodes. The preprocessing logic generates an S-region table in which it stores data on the entry node x, the exit node y and the intermediate nodes for each S-region it identifies. The S-region table is held in the memory of the computer on which the compiler is running.

In setting up the S-region table, the preprocessing logic implicitly tags the instructions of the S-region. In other words, by accessing the S-region table, the instructions which belong to a candidate sub-sequence for suppression can be identified. As the instructions are not physically tagged, there are no tags to be removed after scheduling.

The sub-sequence of instructions for suppression (P) which are implicitly tagged for a given S-region, includes:

- the last statement b of the entry block x if b is a branch statement,
- the label 1 at the top of the exit block y if 1 exists,
- the statements in all remaining blocks of H.

The preprocessor searches for successively larger S-regions H, when delays still exist, storing the appropriate data in the S-region table for each S-region as it is identified. When the preprocessing is complete, the basic block scheduler is then called into operation. Before calling the basic block scheduler, however, the preprocessing logic uses the S-region table and the control flow graph to modify the pointers in the instruction sequence so that the basic blocks occur in the logical sequence dictated by the control flow of the instruction sequence, that is so that the entry block of an S-region precedes all intermediate blocks and that the exit node succeeds all the intermediate blocks. In this embodiment of the invention the preprocessing logic neither modifies the content of the instruction fields (merely the pointers accompanying them) nor modifies the control flow graph.

After modifying the pointers ill the instruction sequence, it is a simple matter for the basic block scheduler to sequence through all the instructions of an S-region from the entry node to the exit node using the pointers in the modified instruction sequence. It should be noted that although the order of the instructions within a basic block in the input instruction sequence (as determined by the pointers) will correspond to the logical sequence in accordance with control flow, this will not normally be the case over basic block boundaries, due to branch and jump instructions between basic blocks.

A conventional basic block scheduler will receive a parameter indicating a basic block to be scheduled. It then uses the data in the control flow graph to determine the instructions for the basic block and to build a data dependence graph with one node per instruction for the basic block, each node recording the register and memory references for the corresponding instruction. It then rearranges the instructions of the basic block using the data dependence graph and in accordance with various heuristics (see reference R6.). The heuristics depend on the details of the computer for which the program including the sequence of instructions is being compiled (i.e. the target computer).

The operation of the basic block scheduling logic in the present instruction scheduler is broadly similar. However, rather than a single parameter, it receives two input parameters from the preprocessing logic, namely the the parameters x and y for the entry and exit blocks.

The basic block scheduler 15 comprises logic for determining whether the entry node x is equal to the exit node y. If so, it determines that it is dealing with a single basic block and proceeds exactly as normal to schedule the instructions of that block. However, if x and y are not equal, it determines that it has to schedule across the control flow.

In a case where the scheduler has to schedule across control flow (i.e. where x and y are not equal), the basic block scheduler works on straight line code consisting of:

(i) the instructions of x (without the last instruction, if a branch);

(ii) the pseudo-instruction (corresponding to the subsequence P);

(iii) the instructions of y (without the first instruction, if a label).

Specifically, the basic block scheduler begins to scan the instructions (i) (i.e. the instructions of the block x, without the last instruction of this is a branch), instruction by instruction using the pointers in the modified sequence, creating a node in a data dependence graph for each instruction. The data dependence graph is held in the memory of the computer on which the compiler is running. When the basic block scheduler reaches the instructions (ii) (i.e. the last instruction of block x if this is a branch, otherwise the first instruction of the first intermediate basic block), it sets a flag to indicate that it is inside an S-region. It then continues to scan through the instructions in the modified sequence until it reaches first instruction of the basic block y if this is a label, otherwise the last instruction of the logically preceding intermediate basic

6

block. It scans through the instructions using the pointers accompanying the instructions in the modified sequence. As it scan the instructions it collates the register and memory references for those instructions. For all these instructions the basic block scheduler only allocates one node in the data dependency graph (i.e. for the pseudo instruction), this node recording the collated register and memory references. In this way the individual instructions corresponding the S-region are suppressed, being replaced by a pseudo-instruction P. It then resets the "inside S-region" flag and proceeds to process the instructions (iii) (i.e. the instructions of basic block y without the first instruction if this is a branch) in the normal way, setting up a node in the data dependence graph for each instruction.

Subsequently, the basic block scheduler proceeds normally to rearrange the instructions of the "straight line" code consisting of the block x (without b if b belongs to P), the pseudo instruction P consisting of the tagged instructions, and the block y (without 1 if 1 belongs to P) using the data dependence graph it has created in accordance with the heuristics for the target computer.

After scheduling, the pointers can he modified using the control flow graph to restore the original order of basic blocks. Note however, that although the order of the basic blocks may be restored (i.e. so that the order of the basic blocks in the input and output sequences are the same), the order of instructions will be different where rescheduling has occurred.

An example of the operation of an instruction scheduler in accordance with the present invention will be further described with reference to Tables 1 to 5. Table 1 illustrates a sample program for scheduling. The two middle columns in Table 2 illustrate intermediate level machine instruction sequence corresponding to line 2 until line 6 of the program of Table 1. The left hand column of Table 2 indicates numbers (I1-I12) for the instructions and the right hand column indicating the basic blocks (B1-B4) in the instructions. The three plus signs to the left of the left hand column will be explained later.

Table 3 illustrates the modified instruction sequence 14 as perceived by the basic block scheduling logic 15. The preprocessing logic 13 has determined that the basic blocks B2, B3, B4 form S-region with an entry at basic block B2 and an exit at basic block B4. From this S-region, it follows that the three instructions labelled with a plus sign in Table 2 can be suppressed, that is, the last instruction of basic block B2 (which is a branch) all instructions of basic block B3 (in this example there is only one) and first instruction of basic block B4 (which is a label). On receipt of the entry parameters giving the entry point as basic block B2, and the exit point as block B4, the basic block scheduler generates its data dependence graph with instructions I8, I9 and I10 suppressed, these instructions being treated as a single pseudo instruction, called here "PSEUDO" and numbered SUPR.

Following the suppression of instructions I8 to I10, instructions from I4 to I12 in Table 3 form "straight-line" code which is scheduled by the basic block scheduler 15 in a conventional manner using the data dependence graph. The resulting scheduled code is illustrated in Table 4, where it can be seen that the basic block scheduler 15 has moved instruction number I11 across the PSEUDO instruction in order to cover pipeline delay between instructions I11 and I12. The full output instruction sequence including the suppressed instructions I8, I9 and I10 is shown in Table 5.

There has been described an instruction scheduler which enables full advantage to be taken of pipelined architectural features by enabling code scheduling beyond basic blocks, while having at its core a basic block scheduler. The invention preferably utilises a flow graph as is generated by conventional compilers to identify candidate code sequences to be treated as summary pseudo instructions. By the addition of the logic for preprocessing the flow graph before it is operated on by the basic block scheduler, S-regions can he generated or recognised by minimal changes to existing compilers. The effect of the preprocessing logic is to decompose the flow graph, identifying sections of code which can be replaced by pseudo instructions for scheduling purposes. This enables the basic block scheduler to identify beneficial scheduling opportunities which would otherwise have been beyond its scope.

Although one example of the present invention has been described, it will be appreciated that modifications and/or additions are possible within the scope of the appended claims.

For example, in the preferred embodiment the preprocessing logic does not physically "tag" the instructions which can be suppressed, although this is implicitly done by identifying the entry and exit points for the S-region. The basic block scheduling logic then suppresses the implicitly "tagged" instructions in response to the information it receives. In an alternative embodiment, the preprocessing logic could be arranged to physically tag the instructions to be suppressed. In other words, a tag field could be provided in the intermediate language instructions used by the basic block scheduler, this tag field being set for those instructions which belong to an S-region to identify the S-region to which it belongs. Then, the basic block scheduler could use the tags on the instructions directly to identify the instructions to be replaced by the pseudo-instruction. In this case, once the basic block scheduler has done its work, the tags would need to be dropped to form the rescheduled output instruction sequence 16.

EP 0 481 617 A2

An alternative to tagging the instructions to generate a pseudo instruction would be to physically replace the instructions of each S-region sub-sequence by saving the sub-sequence in memory and inserting in its place, a pseudo instruction which records the register and memory references of the instructions it replaces, as collated by the preprocessing logic. In this case the preprocessing logic would prepare the list of instructions (i)-(iii) and suppress the S-region through the use of the pseudo subroutine call. In this case the output of the preprocessing logic would be a modified sequence of instructions comprising resulting straight-line code consisting of the block x (without b if b belongs to P), the pseudo subroutine call and the block y (without 1 if 1 belongs to P), and in addition, the separate saved sub-sequence to which the pseudo subroutine call points.

Once the S-region has been identified and replaced by the pseudo subroutine call, a completely conventional basic block scheduler could then be applied to the resulting straight-line code. A pointer to the saved subsequence is preferably associated with the pseudo instruction (eg. as a comment which will not be scheduled by the basic block scheduler). Post processing logic which uses this pointer to access the saved sub-sequences can then be provided to access the saved sub-sequences after scheduling. In this way the sub-sequences can be inserted in the scheduled sequence of instructions in place of pseudo subroutine calls to expand the modified instruction sequence after scheduling into the full, rescheduled output instruction sequence. In such an embodiment, any conventional basic block scheduler can be used without modification.

It will be appreciated that alternative approaches to the suppression of the instructions corresponding to the S-region other than those mentioned above can be envisaged within the scope of the invention. Thus it may be done externally to the basic block scheduler (as in the last mentioned alternative) or partly within the basic block scheduler as in the preferred embodiments and the first mentioned alternative. In all of the above alternatives, however, the scheduler, at some stage of the scheduling process, interprets the sub-sequence of instructions corresponding to the S-region as one instruction.

The degree of post processing needed after scheduling will depend on the particular implementation. As discussed above, if the sub-sequences are physically removed from the intermediate language instruction sequence, then post-processing logic must restore them. If the instructions were physically tagged, then post-processing must remove tags (zero the tag field). If everything is handled implicitly, as in the preferred embodiment, then no post-processing is needed.

In the preferred embodiment of the present invention the instruction scheduler is implemented in software as part of a compiler program. However, it will be appreciated that it could be implemented, at least in part, in the form of hardware logic.

It will also be appreciated that usage of the present invention for other computer architectures besides pipelined machines and other optimisation criteria are possible. For example, on a machine with a small number of registers using a basic block scheduler whose heuristics attempt to reduce the pressures on registers.

8

```
sample()
{
    int i,count;                              ¦ line 1
    count = 0;                                ¦ line 2
    for(i=0;i< 10 ;i++)                       ¦ line 3
    {                                         ¦ line 4
        if (function1(i)) {count  += 1;}      ¦ line 5
    }                                         ¦ line 6
    return count;
}
```

TABLE 1

```
        I1              LI      r31=0               basic block B1
        12              LR      r30=r31             basic block B1
        I3      CL.0:                               basic block B2
        I4              LR      r3=r30              basic block B2
        I5              CALL    r3=function1,1,r3   basic block B2
        I6              C       cr0=r3,0            basic block B2
        I7              AI      r30=r30,1           basic block B2
    +   I8              BT      CL.3,cr0,0x4/eq     basic block B2
    +   I9              AI      r31=r31,1           basic block B3
    +   I10     CL.3:                               basic block B4
        I11             C       cr1=r30,10          basic block B4
        I12             BT      CL.0,cr1,0x1/lt     basic block B4
```

TABLE 2

```
I1          LI       r31=0
I2          LR       r30=r31
I3      CL.0:
I4          LR       r3=r30
I5          CALL     r3=function1,1,r3
I6          C        cr0=r3,0
I7          AI       r30=r30,1
SUPR        PSEUDO   r31,cr0
I11         C        cr1=r30,10
I12         BT       CL.0,cr1,0x1/lt
```

TABLE 3

```
I1          LI       r31=0
I2          LR       r30=r31
I3      CL.0:
I4          LR       r3=r30
I5          CALL     r3=function1,1,r3
I6          C        cr0=r3,0
I7          AI       r30=r30,1
I11         C        cr1=r30,10
SUPR        PSEUDO   r31,cr0
I12         BT       CL.0,cr1,0x1/lt
```

TABLE 4

```
I1          LI       r31=0
I2          LR       r30=r31
I3      CL.0:
I4          LR       r3=r30
I5          CALL     r3=function1,1,r3
I6          C        cr0=r3,0
I11         C        cr1=r30,10
I7          AI       r30=r30,1
I8          BT       CL.3,cr0,0x4/eq
I9          AI       r31=r31,1
I10     CL.3:
I12         BT       CL.0,cr1,0x1/lt
```

TABLE 5

## Claims

1. An instruction scheduler for a computer, the instruction scheduler comprising preprocessing logic for identifying, in an instruction sequence, a candidate sub-sequence of instructions which can be suppressed for the purposes of instruction scheduling and basic block scheduling logic which is responsive to the preprocessing logic for scheduling the instruction sequence with the identified sub-sequence suppressed.

2. An instruction scheduler as claimed in claim 1 wherein the preprocessing logic is operative to produce a modified sequence of instructions in which basic blocks of instructions are arranged in control flow

10

EP 0 481 617 A2

order and wherein the basic block scheduling logic schedules instructions using the modified sequence of instructions.

3. An instruction scheduler as claimed in claim 1 or claim 2 wherein the preprocessing logic identifies an entry block and an exit block for the candidate sub-sequence and wherein the basic block scheduling logic is responsive to notification of an entry block value and an exit block value which differ from one another to suppress the sub-sequence by treating it as a single pseudo instruction.

4. An instruction scheduler as claimed in claim 1 or claim 2 wherein the preprocessing logic tags the instructions of the sub-sequence and wherein the basic block scheduling logic suppresses the tagged instructions by treating them as a single pseudo instruction.

5. An instruction scheduler as claimed in claim 1 or claim 2 wherein the preprocessing logic suppresses the sub-sequence by saving the sub-sequence and inserting a pseudo instruction in its place, the pseudo instruction recording the register and memory references of the instructions it replaces.

6. An instruction scheduler as claimed in claim 5 comprising post-processing logic for expanding the pseudo instruction, after scheduling of the modified sequence, by accessing the saved sub-sequence using a pointer associated with the pseudo instruction and replacing the pseudo instruction by the saved sub-sequence.

7. An instruction scheduler as claimed in any one of the preceding claims wherein the preprocessing logic is responsive to a control flow graph for identifying a candidate sub-sequence for suppression by identifying a region of the graph which has a unique entry and a unique exit and meets predetermined criteria.

8. An instruction scheduler as claimed in claim 7 wherein the predetermined criteria, for a region H of the graph having an entry x and an exit y ($x \neq y$), are:
   a) x and y belong to H;
   b) the set of all predecessors of (H-x) is a subset of (H-y);
   c) the set of all successors of (H-y) is a subset of (H-x); and
   d) there is no region H' which is a subset of H, with entry x' and exit y' satisfying (a)-(c), with x = x' or y = y'.

9. An instruction scheduler as claimed in claim 8 wherein the entry x and the exit y are basic blocks and wherein a candidate sub-sequence for the region H comprises:
   - the last instruction of the entry block x if this is a branch;
   - the label at the top of the exit block y if there is one, and
   - all instructions in all remaining blocks of H.

10. An instruction scheduler as claimed in any preceding claim wherein the preprocessing logic operates repeatedly on the sequence of instructions for identifying a plurality of candidate sub-sequences for suppression.

11. A compiler for a computer comprising an instruction scheduler as claimed in any preceding claim.

12. A computer comprising an instruction scheduler as claimed in any one of claims 1 to 10.

13. A method of scheduling instructions in a computer comprising the steps of:
   a) identifying, in an instruction sequence, a candidate sub-sequence of instructions which can be suppressed for the purposes of instruction scheduling; and
   b) scheduling, using basic block scheduling logic, the instruction sequence with the identified sub-sequence suppressed.

14. A method as claimed in claim 13 wherein step (a) comprises producing a modified sequence of instructions in which basic blocks of instructions are arranged in control flow order and wherein, in step (b), the instructions are scheduled using the modified sequence of instructions.

11

15. A method as claimed in claim 13 or claim 14 wherein step (a) comprises identifying an entry block and an exit block for the candidate sub-sequence and wherein step (b) comprises responding to notification of an entry block value and an exit block value which differ from one another to suppress the sub-sequence by treating it as a single pseudo instruction.

16. A method as claimed in claim 13 or claim 14 wherein step (a) comprises tagging the instructions of the sub-sequence and wherein step (b) comprises suppressing the tagged instructions by treating them as a single pseudo instruction.

17. A method as claimed in claim 13 or claim 14 wherein step (a) comprises the sub-steps of:
   - saving the identified sub-sequence; and
   - inserting a pseudo instruction in its place, the pseudo instruction recording the register and memory references of the instructions it replaces.

18. A method as claimed in claim 17 comprising the subsequent step of:
   c) expanding the pseudo instruction, after scheduling of the modified sequence of instructions, by accessing the saved sub-sequence using a pointer associated with the pseudo instruction and replacing the pseudo instruction by the saved sub-sequence.

19. A method as claimed in any one of claims 13 to 18 wherein the step of identifying of a candidate sub-sequence for suppression comprises identifying a region of a control flow graph for the input instruction sequence, which region has a unique entry and a unique exit and meets predetermined criteria.

20. A method as claimed in claim 19 wherein the predetermined criteria, for a region H of the graph having an entry x and an exit y (x ≠ y), are:
   a) x and y belong to H;
   b) the set of all predecessors of (H-x) is a subset of (H-y);
   c) the set of all successors of (H-y) is a subset of (H-x); and
   d) there is no region H' which is a subset of H, with entry x' and exit y' satisfying (a)-(c), with x = x' or y = y'.

21. A method as claimed in claim 20 wherein the entry x and the exit y are basic blocks and wherein a candidate sub-sequence for the region H comprises:
   - the last instruction of the entry block x if this is a branch;
   - the label at the top of the exit block y if there is one, and
   - all instructions in all remaining blocks of H.

22. A method as claimed in any one of claims 13 to 21 wherein step (a) is performed repeatedly for identifying a plurality of candidate sub-sequences for suppression.

12

FIG 1

**FIG. 2**